# EUROPÄISCHE PATENTSCHRIFT

(11) **EP 3 092 129 B1**
(45) Veröffentlichungstag und Bekanntmachung des Hinweises auf die Patenterteilung: **04.04.2018**
(21) Anmeldenummer: 15706138.3
(22) Anmeldetag: 07.01.2015
(51) Int. Cl.: B41K 1/36, B23K 26/00, B23K 26/10, B41K 1/38, B41C 3/04, B41D 7/00

(54) **BEARBEITUNGSSYSTEM FÜR MEHRERE UNTERSCHIEDLICHE WERKSTÜCKE**
MACHINING SYSTEM FOR A PLURALITY OF DIFFERENT WORKPIECES
SYSTÈME D'USINAGE POUR PLUSIEURS PIÈCES À USINER DIFFÉRENTES

(30) Priorität: 10.01.2014 AT 500172014
(43) Veröffentlichungstag der Anmeldung: 16.11.2016
(73) Patentinhaber: Trodat GmbH, 4600 Wels (AT)
(72) Erfinder: PINOT, Jean-Philippe, 94 210 La Varenne Saint Hilaire (FR); VERRIER, Stéphanie, 94 880 Noiseau (FR)
(86) Internationale Anmeldenummer: PCT/AT2015/050003
(87) Internationale Veröffentlichungsnummer: WO 2015/103654

(56) Entgegenhaltungen:
- EP-A2- 2 594 406
- WO-A1-2004/085110
- WO-A2-2011/056345
- US-A1- 2001 049 669

## Beschreibung

Die Erfindung betrifft ein Bearbeitungssystem, sowie ein Verfahren zum Betreiben eines Bearbeitungssystem, wie sie in den Oberbegriffen der Ansprüche 1 und 6 beschrieben sind.

Aus der EP 2 594 406 A ist ein Laserplotter zum Gravieren, Markieren und/oder Beschriften eines Werkstückes bekannt, bei dem in einem Gehäuse des Laserplotters mehrere, insbesondere zwei Laser, angeordnet sind. Die Steuerung erfolgt über eine in einer Steuereinheit laufenden Software, wobei an einer externen Komponente, insbesondere einem Computer, eine Grafik und/oder Text erstellt wird, welcher an die Steuereinheit des Laserplotters übergeben wird, die aus einer hinterlegten Datenbank eine Konvertierung der übergebenen Daten vornimmt. Die Zuordnung der unterschiedlichen Stahlquellen erfolgt in Form von Farben bzw. Farb-Codes, wobei in der Datenbank zu den unterschiedlichsten Farben ein Korrekturwert für die unterschiedlichen Positionen, insbesondere Höhenkorrekturwert zur Kompensation der unterschiedlichen Fokuslagen oder Brennweiten der unterschiedlichen Strahlquellen hinterlegt sind. Nachteilig ist hierbei, dass bei diesem System ein Fachpersonal für die Positionierung und Einstellung notwendig ist, da in der Datenbank nur bearbeitungstechnische Daten gespeichert sind.

Weiters ist aus der WO 2004/085110 A1 wiederum eine Laserplotter bekannt, der mit einer externen Komponente, insbesondere einen Computer, verbunden ist. Dieser Laserplotter dient dazu, dass in den Bearbeitungsraum ein Stempelkissen mit einem darin angeordneten Verbundteil, insbesondere einen Schaum, eingelegt wird, worauf mit den Laser vorgegebenen Trennfugen durch Schneiden des Schaumes erzeugt werden, sodass die einzelnen erzeugten Schaumteil mit unterschiedlichen Farben getränkt werden können. Nachteilig ist hierbei wiederum, dass für die Handhabung des Laserplotters ein Fachpersonal erforderlich ist, da hier eine exakte Positionierung und Einstellung des Startpunktes für den Schneidprozess erforderlich sind.

Aus dem Stand der Technik sind System bekannt, bei denen von speziell geschultem Fachpersonal, sogenannten Stempelmachern, Stempelplatten bzw. Textplatten für Stempel, insbesondere Handstempel, erstellt werden. Dazu wird von dem Fachpersonal an einem Computer unter zu Hilfenahme von standardisierter Software, insbesondere Corel-Draw, Word, usw., ein Stempelabdruck durch Grafiken und/oder Texte entsprechend den Wünschen des Kunden erstellt. Daraufhin werden die Daten an ein Bearbeitungsgerät, insbesondere einen Laserplotter, oder eine Steuerung hierfür übertragen, worauf eine Konvertierung der Daten bevorzugt unter zu Hilfenahme von hinterlegten Daten u/o Tabellen erfolgt. Anschließend legt das Fachpersonal ein Werkstück, insbesondere einen sogenannten Rohling, der aus einem flexiblen Gummi gebildet ist, in die Bearbeitungsvorrichtung, worauf eine manuelle und oder automatische Positionierung des Bearbeitungsgerätes, insbesondere einer Strahlquelle eines Lasers, erfolgt. Das Fachpersonal startet daraufhin den Bearbeitungsvorgang, sodass ein Negativabdruck des vom Fachpersonal am Computer erstellten Stempelabdrucks am Rohling erzeugt wird. Nachdem der Bearbeitungsvorgang beendet ist, entnimmt das Fachpersonal den Rohling und reinigt diesen von den Bearbeitungsrückständen. Anschließend wird der negative Stempelabdruck auf den Druckplattenträger, an dem bereits eine Klebeschicht angeordnet ist, aufgeklebt. Nachteilig ist hierbei, dass bei einem derartigen Vorgehen der Kunde den Stempel nicht direkt mitnehmen kann, sondern diesen erst später abholen kann bzw. ihm zugeschickt wird. Darüber hinaus kann der Kunde auch keinen Einfluss bei der Erstellung des Stempelabdruckes nehmen, da dieser vom Fachpersonal erstellt wird und nicht direkt vom Kunden.

Aus der WO 2011/151604 A ist ein Bearbeitungssystem zum Gravieren von Anhängern, insbesondere Kettenanhänger, bekannt. Dabei wird auf einen mit dem Bearbeitungsgerät verbundenen Eingabegerät ein handschriftliche Text bzw. Graphik über einen Eingabestift erzeugt, der anschließend an einem Computer übertragen wird. Vom Computer wird anschließend das Bearbeitungsgerät, in dem der Anhänger eingelegt wird, angesteuert, sodass der handschriftlich erzeugte Text bzw. Graphik in den Anhänger graviert wird. Nachteilig ist hierbei, dass nur ein einziger Bearbeitungsprozess, insbesondere zum Gravieren von Anhängern, mit der Anlage durchgeführt werden kann.

Weiters ist aus dem Stand der Technik, insbesondere aus der US 7 853 353 B, der US 7 877 909 B, der US 7 894 935 B, der US 8050796 B und der US 8 413 357 B, ein

Bearbeitungssystem bekannt, bei dem oberhalb des Bearbeitungsbereich ein daran befestigtes Eingabe- und Anzeigeelement angeordnet ist, über den ein User seine Eingabe zum Gravieren eines Anhängers, insbesondere eines Herz-Anhängers, durchführen kann. Weiters weist das Bearbeitungssystem eine verfahrbare Aufnahmevorrichtung im Bearbeitungsbereich auf, in der der Anhänger positioniert wird. Dazu wird die Aufnahmevorrichtung in eine Einlegeposition, bei der die Aufnahmevorrichtung teilweise aus den Gehäuse des Bearbeitungssystem herausragt, verfahren, sodass der Anhänger in die Aufnahmevorrichtung eingelegt werden kann. Daraufhin wird die Aufnahmevorrichtung zur Bearbeitung in die Bearbeitungsposition unterhalb des Eingabe- und Anzeigeelementes gefahren. Nach Beendigung des Graviervorganges wird die Aufnahmevorrichtung wiederum zur Entnahme des Anhängers verfahren. Nachteilig ist hierbei, dass ein sehr hoher Aufwand für nur einen Bearbeitungsprozess, nämlich das Gravieren eines Anhängers, notwendig ist.

Aus der US 6 732 649 B1 ist ein Verfahren zum Erzeugen einer Stempelplatte beschrieben, wobei dabei über am Bearbeitungsgerät die Daten für die Stempelplatten eingeben werden und anschließend ein photopolymere Stempelplatte belichtet wird. Nachteilig ist bei derartigen Systemen, dass mit dem Bearbeitungsgerät nur eine Aufgabe, nämliche die des Erzeugens einer photopolymeren Stempelplatte, durchgeführt werden kann. Dokument US 2001/049669 offenbart ein Verfahren gemäß Oberbegriff von Anspruch 6. Die Aufgabe der Erfindung liegt darin, ein Bearbeitungssystem, sowie ein Verfahren zu schaffen, bei dem die Bedienerfreundlichkeit wesentlich erhöht wird. Gleichzeitig soll der Wartungsaufwand für die Anlagen bzw. System so gering als möglich gehalten werden. Eine weitere Aufgabe liegt darin, die Nachteile des Standes der Technik möglichst zu beheben.

Die Aufgabe der Erfindung wird durch ein Bearbeitungssystem gelöst, bei dem der Steuerbereich und/oder Eingabebereich zur automatischen Erkennung des in der Datenbank hinterlegten Werkstückes durch Erfassen des Werkstückes ausgebildet ist.. Vorteilhaft ist hierbei, dass dadurch die unterschiedlichsten Produkte bzw. Werkstück auswählbar sind und somit eine wesentliche Qualitätsverbesserung bei möglichst geringen Eingabeaufforderungen erreicht wird, d.h., dass aufgrund der Datenbank bereits eine Vielzahl von Informationen bzw. Daten zu den einzelnen Produkte gespeichert sind, sodass der User nur noch seine Text und/oder Graphik eingeben muss. Damit werden Eingabefehler reduziert, da der User nicht über die Beschaffenheit des Produktes, beispielsweise über das verwendete Material, bescheid wissen muss, um für die Bearbeitung die Best mögliche Qualität zu erzielen. Speziell hat sich der Vorteil der Verwendung einer Datenbank ergeben, wenn als Bearbeitungsgerät ein Laserplotter mit mehreren, insbesondere zwei unterschiedlichen Strahlquellen gezeigt, da für die unterschiedlich gespeicherten Materialien der Produkte der dazu passende Laser verwendet werden kann, ohne das dazu zusätzliche Eingaben vom User oder Operator erforderlich sind. Somit wird die Bedienerfreundlichkeit einer derartigen Bearbeitungssystems wesentlich vereinfacht und erhöht. Insbesondere ist eine derartige Ausbildung von Vorteil, wenn die Anlage für mehrere unterschiedliche Produkte bzw. Werkstücke konzipiert ist, sodass eine sehr hohe Anzahl an zu verarbeitenden Produkte bzw. Werkstücke vorhanden sind, deren Daten entsprechend verwaltet werden müssen.

Von Vorteil ist die Ausgestaltung, bei der das Werkstück bzw. der Rohling von der Datenbank über die Bedienersoftware auswählbar ist oder in die Bedienersoftware ladbar sind, da dadurch der User über das bevorzugt abnehmbare Eingabegerät bzw. Anzeigeelement auf alle Produkte in Ruhe zugreifen kann.

Durch eine Ausgestaltung, bei der das automatische Erkennen des Werkstückes durch die Erfassung der Länge, der Breite und der Höhe des Werkstückes erfolgt, wird in vorteilhafter Weise erreicht, dass damit eine einfache kostengünstige Erkennung möglich ist. Damit jedoch eine derartige Erkennung umgesetzt werden kann, ist es erforderlich, dass der User zumindest eine definierte Produktgruppe des zu bearbeitenden Werkstückes vorgibt bzw. auswählt oder das aus einer diesen Werten entsprechenden Produktliste der User das entsprechende Produkt auswählt, falls mehrere Übereinstimmungen vorhanden sind.

Bei der Ausgestaltung, bei der zum automatischen Erkennen des Werkstückes eine Kamera zur Aufnahme des Bearbeitungsbereiches oder des Werkstückes angerordnet ist, wird in vorteilhafter Weise erreicht, dass dadurch ein graphische Auswertung möglich ist, sodass die Anzahl übereinstimmender Produkt stark reduziert wird bzw. das Produkt exakt zugeordnet werden kann. Auch ist es damit möglich, dass dem User das tatsächliche Produkt auf eine Display dargestellt wird. Somit kann der User auch einen optischen Vergleich mit hinterlegten Produkten durchführen und das entsprechende Produkt auswählen, wenn bei der Erkennung keine Zuordnung möglich war.

Vorteilhaft ist auch eine Ausgestaltung, bei der für die unterschiedlich hinterlegten Werkstücke zumindest ein oder mehrere Bearbeitungsbereiche definiert und gespeichert sind, die über die Bedienersoftware auswählbar sind, da dadurch die Zerstörung durch falsche Bearbeitung des Produktes verhindert wird. Dies ist insofern eine wesentliche Erleichterung für den User, da oftmals die Produkte Beschriftungen, Logos oder Schutzabdeckungen aufweisen, in denen eine Bearbeitung nicht sinnvoll ist bzw. zu einer Zerstörung der Funktionalität, wie beispielsweise ein Gravur über eine Schutzabdeckung für eine Kamera einer Handyhülle, führt. Damit kann sichergestellt werden, dass der User nur in jene Bereiche einen Bearbeitungsprozess durchführen kann, der keinerlei Beeinträchtigungen oder Schäden am Produkt verursacht.

Die Aufgabe der Erfindung wird auch durch ein Verfahren zum Betreiben eines Bearbeitungssystem gelöst, bei dem in dem Bearbeitungssystem, insbesondere in einem Eingabebereich und/oder dem Steuerbereich, eine Datenbank betrieben wird, in der Daten der zu bearbeitenden Werkstücke bzw. Rohlinge gespeichert werden, wobei von dem Steuerbereich und/oder dem Eingabebereich eine automatischen Erkennung des in der Datenbank hinterlegten Werkstückes durch Erfassen des Werkstückes erfolgt..

Vorteilhaft ist hierbei, dass dadurch eine sehr einfache Bedienung der Anlage von einem User durchgeführt werden kann. Gleichzeitig wird dadurch die Fehlerquelle von Falscheingabe stark vermindert, da der User nur mehr das richtige Produkt wählen muss. Auch können durch eine Verbindung mit dem übergeordneten Netzwerk, insbesondere dem Internet, kostengünstige Fernwartungen durchgeführt werden. Darüber hinaus ist ein sehr rascher Datenaustausch möglich, sodass die einzelnen Anlagen am Letztstand gehalten werden können. Insbesondere durch den Einsatz der Datenbank, in der die Produkte gespeichert sind, ist es erforderlich, dass die Daten von neuen Produkte möglichst schnell in den einzelnen Anlagen aktualisiert werden, was über das Internet einfach möglich ist.

Schließlich sind aber auch die Maßnahmen von Vorteil, bei dem eine Erfassung des Werkstückes über ein Lesesystem, durchgeführt wird, wobei vom Lesesystem ein am Werkstück angebrachten Code erfasst wird, worauf die für dieses Werkstück hinterlegten Daten in die Bedienersoftware am Eingabegerät bzw. Anzeigeelement geladen werden, da dadurch eine weitere Vereinfachung der Bedienerfreundlichkeit des Bearbeitungssystems erzielt wird.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösungen begrenzt ist.

Es zeigen:
- Fig.1: ein Übersichtschaubild eines Bearbeitungssystems zur Bearbeitung von Werkstücken und Erzeugung von Textplatten für Stempel;
- Fig.2: eine schaubildliche Darstellung mehrerer Bearbeitungssystem an unterschiedlichen Aufstellungsorten;
- Fig.3: eine schematische Darstellung eines Bearbeitungssystem mit zusätzlichen Komponenten, insbesondere zum Erfassen eines Werkstücks;
- Fig.4: ein Werkstück in vereinfachter, schematischer Darstellung mit unterschiedlichen Bearbeitungsbereichen.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

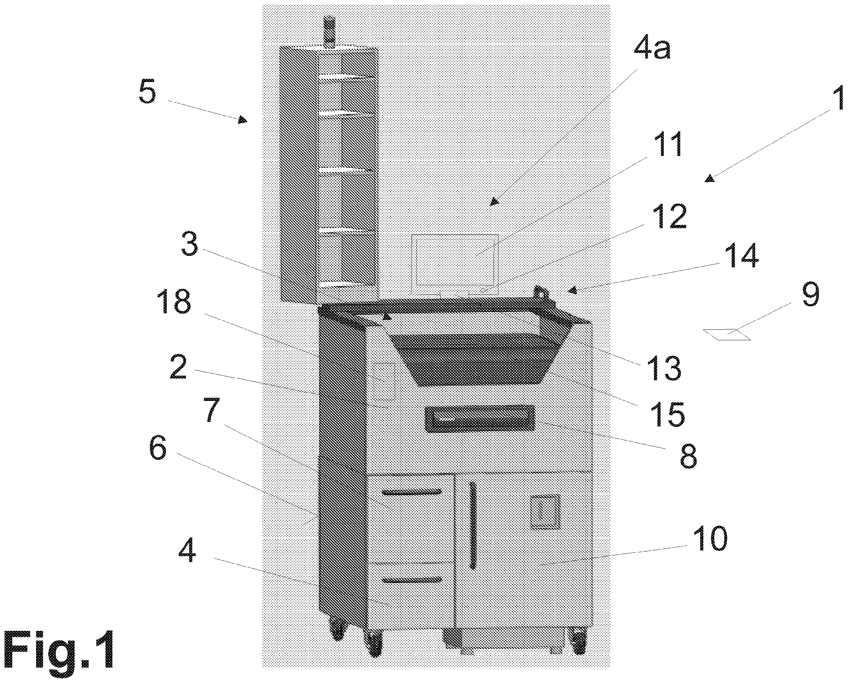

In den Fig. 1 bis 4 ist ein Bearbeitungssystem 1 bzw. Bearbeitungsgerät 1 mit verschiedensten Komponenten bzw. Aufbauten gezeigt.

Das Bearbeitungssystem 1, gemäß Fig.1, weist ein Gehäuse 2 auf, in dem die verschiedensten Komponenten integriert sind. Das Bearbeitungssystem 1 umfasst zumindest einen Bearbeitungsbereich 3, einen Steuerbereich 4, einen Eingabebereich 4a und optional einen Aufnahmebereich 5 und/oder Präsentationsbereich 5. Hierbei wird darauf hingewiesen, dass die einzelnen Anordnungen der Komponenten im Gehäuse 2 nicht auf die Darstellung beschränkt ist, sondern die Komponenten entsprechend an andere Stellen im Gehäuse 2 angeordnet sein können.

Das Gehäuse 2 ist bevorzugt aus Metall, insbesondere Blech, gebildet und weist mehrere Türen auf, sodass eine einfache Zugänglichkeit der dahinter angeordneten Komponenten möglich ist. Bevorzugt ist im hinteren Bereich, insbesondere auf der Rückseite, eine Stromversorgungseinheit 6 angeordnet, von der aus die einzelnen Komponenten mit Energie versorgt werden können. Die Stromversorgungseinheit 6 wird über ein Anschlusskabel (nicht dargestellt) mit einem öffentlichen Stromversorgungsnetz (nicht dargestellt) verbunden. Es ist auch möglich, dass in der Stromversorgungseinheit 6 ein Notstromsystem (nicht dargestellt) integriert ist, welches bevorzugt automatisch aktiviert ist, wenn das öffentliche Stromversorgungsnetz keine Energie mehr liefert. Somit ist sichergestellt, dass bei einem Stromausfall zumindest über eine gewisse Zeitdauer das Bearbeitungssystem 1 oder zumindest die wesentlichen Elemente noch mit Energie versorgt werden, sodass bereits vorgenommene Einstellungen, Bearbeitungsvorgänge oder dgl., beendet und/oder gespeichert werden können.

Weiters ist im Gehäuse 2 ein Kommunikationssystem 7, insbesondere ein Computer mit einem Drucker, angeordnet. Das Kommunikationssystem 7 dient dazu, um von einem Nutzer eingegebenen Aufträge auszugeben und/oder einen optischen Ausdruck der Eingabe zur Kontrolle zu haben, d.h., dass bei einer Nutzung des Bearbeitungssystem 1 eine schriftliches Bestätigung bzw. Auftrag ausgegeben werden kann, die der Nutzer für sich verwenden kann oder das der Nutzer sich einen Ausdruck seiner erstellten Eingabe zur Voransicht machen kann, um diesen bei nicht gefallen noch nachbearbeiten zu können, bevor dieser umgesetzt wird. Dabei ist es auch möglich, dass im Kommunikationssystem 7 auch ein Scan-Gerät angeordnet ist, über das beispielsweise die abgezeichnete Bestätigung oder der Auftrag eingescannt werden kann. Bevorzugt wird das Scan-Gerät jedoch dazu verwendet, um beispielsweise Graphiken, Layouts, Bilder, Firmenlogos einzuscannen, welche für die spätere Bearbeitung verwendet werden können.

Auch ist es möglich, dass ein oder mehrere zusätzliches Module (nicht dargestellt) mit darin integrierten Komponenten an das Gehäuse 2 des Bearbeitungssystems 1 zu koppeln. Bevorzugt werden diese an den Seitenwänden des Gehäuses 2 angebracht.

Dadurch ist eine nachträgliche Erweiterung des Bearbeitungssystem 1 möglich. Beispielsweise kann ein derartiges Modul als Komponente einen Scanner aufweisen, der beispielsweise auf das Modul aufgestellt ist oder derart integriert ist, dass dieser von Nutzer von oben einfach bedient werden kann, in dem dieser eine Abdeckung bzw. Deckel öffnet. Auch ist es möglich, dass ein derartiges Modul als Lager für Werkstücke 9 oder Papier genützt werden kann.

Es ist auch möglich, dass ein Recyclingsystem 8 im Gehäuse 2 des Bearbeitungssystem 1 angeordnet ist. Das Recyclingsystem 2 weist einen Auffangbehälter und eine Einwurföffnung auf, durch die Reste eines bearbeiteten Werkstückes 9 bzw. Rohlings 9 eingeworfen werden können.

Weiters ist im Bearbeitungssystem 1 ein Reinigungssystem 10, insbesondere eine Absauganlage, integriert, die einerseits während eines Bearbeitungsvorganges im Bearbeitungsbereich 3 und andererseits nach einem Bearbeitungsvorganges über eine definierte Zeitdauer zum Reinigen des Werkstückes 9 aktiviert ist. Das Reinigungssystem 10 ist bevorzugt derart ausgebildet, dass während eines Bearbeitungsvorganges die Luft im Bereich des zu bearbeitenden Werkstückes 9 absaugt, sodass beim Öffnen des Bearbeitungsraumes keine Geruchsbelästigungen für den User bzw. Operator entstehen. Nach Beendigung des Bearbeitungsvorganges wird vom Reinigungssystem 10 automatisch beispielsweise über eine Ventilklappe (nicht dargestellt) auf die Reinigungsfunktion für den Nutzer umgeschaltet, sodass dieser nunmehr über einen Schlauch (nicht dargestellt) mit einer daran befestigten Saugbürste das Werkstück 9 reinigen kann und somit die Staubpartikel abgesaugt werden können. Damit im Aufstellungsbereich keinerlei Geruchsbelästigungen auftreten, ist das Reinigungssystem 10 mit entsprechenden Filtern ausgestattet.

Wesentlich bei einem derartige Bearbeitungssystem 1 ist, dass mehrere unterschiedliche Werkstücke 9 bzw. Rohlinge 9 mit einem einzigen Gerät verarbeitet bzw. bearbeitet werden können, wobei die Bedienung des Gerätes bzw. des Bearbeitungssystem 1 derart vereinfacht wurde, dass lediglich ein Operator oder ein Kunde selbstständig mit dem Bearbeitungssystem 1 arbeiten kann. D.h., dass für die Vor Ortbetreuung keinerlei Fachpersonal für das Bearbeitungsgerät 1 vorhanden ist, sondern lediglich ein geschulter Operator, insbesondere Verkäufer eines Kaufhauses. Für die einfache Bedienung ist am Bearbeitungssystem 1 ein abnehmbares Eingabegerät 11 bzw. Anzeigeelement 11 des Eingabebereiches 4a, an der eine Bedienersoftware, im Folgenden auch "Trodesign" genannt, installiert ist, angeordnet. Im Steuerbereich 4 ist eine mit der Bedienersoftware korrespondierende Steuersoftware, im Folgenden auch "JobControl" genannt, integriert, und dass durch Verbinden des Anzeigeelementes 11 mit dem Bearbeitungssystem 1 oder durch Aktivierung über einen Button 12 am Anzeigeelement 11 das Bearbeitungssystem 1 mit diesem Anzeigeelement 11 verbunden ist, d.h., dass das Anzeigeelement 11 unabhängig vom Bearbeitungssystem 1, also bei abgenommen Anzeigeelement 11, betrieben wird bzw. betreibbar ist, sodass mit der am Anzeigeelement 11 installierten Bedienersoftware gearbeitet werden kann und erst durch bewusstes Koppeln bzw. Verbinden mit dem Bearbeitungssystem 1 das Anzeigeelement 11 in das Bearbeitungssystem 1 integriert ist. Durch eine derartige Ausbildung hat der Nutzer die Möglichkeit das Anzeigeelement 11 vom Bearbeitungsgerät 1 abzunehmen und in Ruhe seine Eingabe vorzunehmen. Selbstverständlich ist es möglich, dass das Anzeigeelement 11 auch am Bearbeitungssystem 1 positioniert bleiben kann und direkt die Eingabe vorgenommen werden können. Das sogenannte Anzeigeelement 11 dient als Eingabegerät, welches bevorzugt eine Touchfunktion aufweist, d.h., dass durch Berühren der Oberfläche eine Eingabe am Anzeigeelemente 11 vorgenommen werden kann. Auch ist es möglich, dass mehrere Anzeigeelemente 11 gleichzeitig eingesetzt werden können, die gleichzeitig von unterschiedlichen Usern bedient werden, da die Anzeigeelemente 11 unabhängig vom Bearbeitungsgerät 1 betrieben werden können.

Für das Anzeigeelement 11 ist eine Kontaktvorrichtung 13 zum Kontaktieren, insbesondere zum Hineinstecken, angeordnet. Bevorzugt ist die Kontaktvorrichtung 13 auf einem Slidingboard 14 angeordnet, wobei das Slidingboard 14 zum Abdecken des Bearbeitungsbereichs 3, insbesondere zum Abdecken eines Teilbereichs des Bearbeitungsbereichs 3, ausgebildet ist. Als Sicherheitsfunktion kann das Slidingboard 14 mit entsprechenden Sensoren ausgestattet sein, sodass erst durch Schließen des Slidingboards 14 eine Aktivierung des Bearbeitungssystem 1 möglich ist, wogegen beim Öffnen während eines Arbeitsprozesses dieser unterbrochen wird. Selbstverständlich ist es möglich, dass die Stromversorgung, insbesondere das Aufladen des Anzeigeelementes 11 über die Kontaktvorrichtung 13 erfolgt.

Bevorzugt erfolgt die Aktivierung des Bearbeitungssystem 1 durch Verbinden des Anzeigeelementes 11 mit der Kontaktvorrichtung 13 oder drahtlos durch Verbinden über eine Betätigung des entsprechen hard- oder softwaremäßigen ausgeführten Button 12.

Durch das Verbinden wird beispielsweise eine Datenübertragung von der Bedienersoftware zur Steuersoftware ausgelöst, sodass eine Verarbeitung der Daten möglich ist. Hierzu ist der Bearbeitungsbereich 3 durch einen Laserplotter 15 gebildet. Der Laserplotter 15 ist zum Gravieren, Markieren, Schneiden und Herstellen für unterschiedliche Werkstücke 9, insbesondere vom Stempelplatten bzw. Stempelplatten-Rohlingen 9, Schilder, Handys, Tablet-Computer, Kugelschreiber, Sticks, Computerzubehör, wie beispielsweise Hüllen, Taschen, usw., ausgebildet. Es kann ein ein- oder mehrstrahliger Laserplotter 15 verwendet werden, wobei bei einem Einsatz eines mehrstrahligen Laserplotters 15 für die unterschiedlichen Materialien die unterschiedlichen Laser verwendet werden können, d.h., dass beispielsweise vom Operator bzw. User in der Bedienersoftware bereits das zu bearbeitende Material ausgewählt wird, sodass anschließend von der Steuersoftware die entsprechende Laserquelle bzw. Laser aktiviert wird.

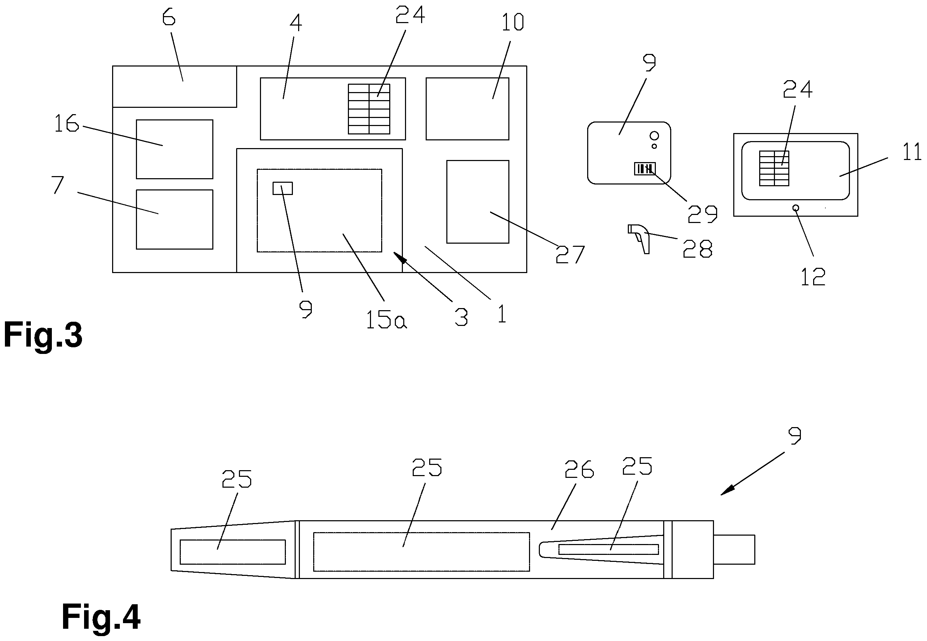

Um eine weitere bedienerfreundliche Ausstattung des Bearbeitungssystem 1 zu erreichen, ist der Bearbeitungsbereich 3 des Laserplotters 15 derart ausgebildet, dass in den Bearbeitungsbereich 3 des Laserplotters 15 eine Bearbeitungseinlage 15a, (schematisch in Fig. 3 angedeutet) einlegbar ist bzw. angeordnet ist. Bevorzugt ist die Bearbeitungseinlage 15a derart ausgebildet, dass auf einer Bearbeitungseinlage 15a mehrere unterschiedliche Werkstücke 9 bzw. Rohlinge 9 positionierbar sind, d.h., dass beispielsweise auf einer Bearbeitungseinlage 15a ein Stempelplatten-Rohling 9, ein Schild (nicht dargestellt) oder ein Zusatzelement für weitere Werkstücke 9, wie beispielsweise, Kugelschreiber, Sticks, usw., positionierbar ist, sodass für diese unterschiedliche Werkstücke 9 die Bearbeitungseinlage 15a nicht getauscht werden muss. Eine derartige Bearbeitungseinlage 15a kann im Detail aus der parallel laufenden österreichischen Prioritätsanmeldung entnommen werden.

Grundsätzlich kann gesagt werden , dass an dem Eingabegerät 11, insbesondere dem Anzeigeelement 11, vom Nutzer ein gewünschter Bearbeitungsvorgang über die Bedienersoftware erstellt wird, worauf der Bearbeitungsvorgang an ein Steuergerät, insbesondere an eine Steuersoftware, übergeben wird und von diesem derart umgewandelt wird, dass eine Ansteuerung des Bearbeitungsgeräts 1, insbesondere des Laserplotters 15, zum Durchführen des gewünschten Bearbeitungsvorgang durchgeführt wird, worauf das Werkstück 9 in das Bearbeitungsgerät 1, insbesondere auf einer Bearbeitungseinlage 15a, positioniert wird und der Bearbeitungsprozess gestartet werden kann.

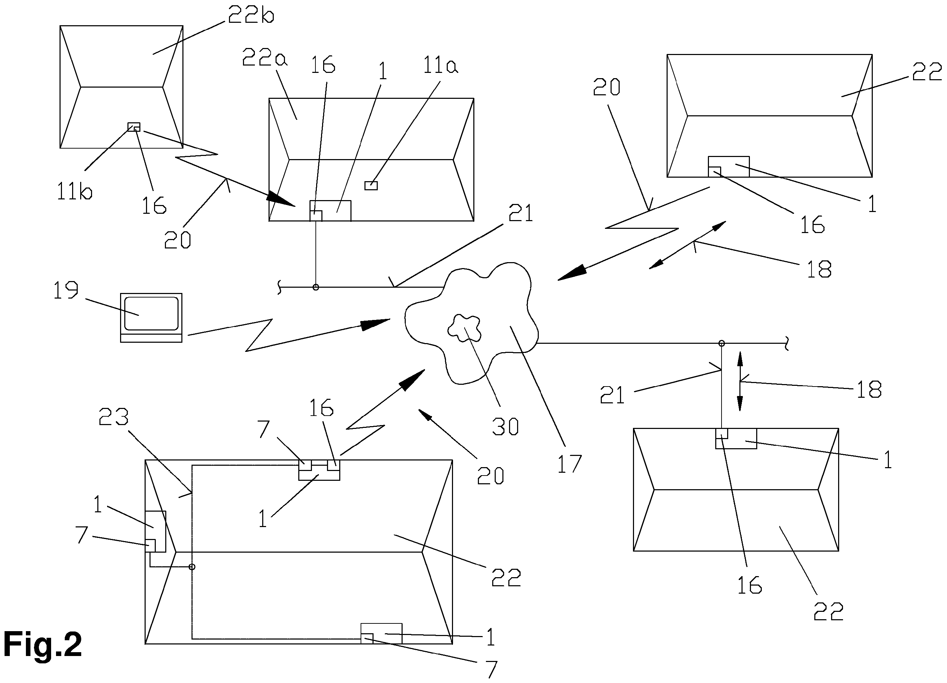

Damit das Stand-Alone-Gerät einfach betrieben werden kann, ist im Bearbeitungssystem 1, insbesondere im Gehäuse 2, ein Verbindungssystem 16 zum Verbinden des Bearbeitungssystem 1, insbesondere der einzelnen Bereich, mit einem übergeordneten Netzwerks 17, insbesondere einem Internet, angeordnet, wobei das Verbindungssystem 16 zum Senden und Empfangen von Daten 18 (schematisch durch einen Pfeil dargestellt) ausgebildet ist, wie dies schematisch in Fig. 2 gezeigt ist. Das Verbindungssystem 16 ist zum manuellen oder automatischen Verbindungsaufbau vom Bearbeitungsgerät 1 bzw. Bearbeitungssystem 1 ausgebildet, oder dass von einer externen Komponente 19, wie beispielsweise einen Computer, ein Verbindungsaufbau über das Verbindungssystem 16 automatisch aktivierbar bzw. möglich ist. Das Verbindungssystem 16 kann darüber hinaus auch in der Steuereinheit 4 oder dem Kommunikationssystem 7 integriert sein.

Die Verbindung mit dem übergeordneten Netzwerk 17 kann kabellos per Funk 20 oder über ein Kabel 21, insbesondere Netzwerk- oder Telefonkabel oder Glasfaserkabel, beispielsweise eines Geschäftes 22 bzw. Kaufhauses 22 erfolgen. Insbesondere ist es möglich, das ein sogenannter Internet-Stick bzw. Daten-Stick einsetzbar ist. Hierzu ist es von Vorteil, wenn das Verbindungssystem 16 mit dem Kommunikationssystem 7 zusammen wirkt, da der Internet-Stick an dem Computer, insbesondere an eine USB-Schnittstelle, des Kommunikationssystems 7 einfach angesteckt werden kann. Wird das Bearbeitungssystem 1 mit dem Verbindungssystem 16 ausgestattet, so wird eine eigene Identifikationsnummer, insbesondere IP-Nummer, vergeben, sodass das Bearbeitungsgerät 1 direkt angesprochen werden kann. Auch ist es möglich, dass in dem Geschäft 22 bzw. Großkaufhause 22 mehrere Bearbeitungssystem 1 aufgestellt sind, die über ein Kabel 23, insbesondere ein Netzwerkkabel 23, miteinander verbunden sind, wobei nur ein einziges Bearbeitungssystem 1 mit dem Verbindungssystem 16 ausgestattet ist, über den die weiteren Bearbeitungssystem 1 ebenfalls aktivierbar bzw. ansteuerbar sind. Bevorzugt erfolgt der interne Datenaustausch über das Kommunikationssystem 7 jedes Bearbeitungssystems 1.

Durch den Einsatz des Verbindungssystem 16 wird erreicht, dass das Bearbeitungssystem 1 Daten abschicken kann oder externe Daten empfangen kann. Dadurch kann auch eine Fernwartung beispielsweise über die externe Komponente 19 durchgeführt werden, da über die Datenverbindung auf sämtliche Daten bzw. Systeme zugegriffen werden kann. Besonders von Vorteil ist, dass über das übergeordnete Netzwerk 17 Software-Updates versendet werden, sodass sämtliche im Einsatz befindlichen Bearbeitungssystem 1 auf einem einheitlichen Stand gehalten werden können. Somit können durch derartige Updates Softwarefehler oder Fehlfunktionen sehr rasch behoben werden.

Darüber hinaus ist es möglich, dass das Bearbeitungssystem 1 mit einer Datenbank 24 ausgestattet ist, d.h., dass in dem Eingabebereich, insbesondere am Anzeigeelement 11, und/oder dem Steuerbereich 4 eine Datenbank 24 integriert ist, in der Daten der zu bearbeitenden Werkstücke 9 hinterlegt sind, wie dies schematisch in Fig. 3 dargestellt ist. Damit ist es möglich, dass bei der Erstellung eines Bearbeitungsprozesses, insbesondere eines Gravierprozesses, vom User das Werkstück 9 aus der Datenbank 24 auswählt, sodass sämtliche Daten für dieses Werkstück 9 automatisch geladen werden. Die Daten umfassen beispielsweise die Werkstückbezeichnung oder Typenbezeichnung, eine graphische Abbildung des Werkstückes 9, die Länge, Breite und Höhe des Werkstückes 9, usw. Weiters sind für die unterschiedlich hinterlegten Werkstücke 9 zumindest ein oder mehrere Bearbeitungsbereiche 25 bzw. Gravierbereiche 25 gespeichert, sodass der User speziell die gespeicherten Gravierbereiche 25 aktivieren kann und mit entsprechenden Texten bzw. Graphiken ausfüllen kann, wie dies bei einem Werkstück 9 in Form eines Kugelschreibers 26 in Fig. 4 gezeigt ist. Insbesondere können durch die Festlegung bestimmter Bearbeitungsbereiche 25 verhindert werden, dass die Werkstücke 9 ungewollt zerstört werden, d.h., dass beispielsweise bei einer Gravur eines Smartphones diese auf der Rückseite an verschiedensten Stellen die Kamera für die Fotoaufnahme und die Firmenlogos bzw. Beschriftungen angeordnet sind, sodass in diese Bereichen keine Gravur durchgeführt werden darf, da an sonst die Optik bzw. der durchsichtige Schutzfolie bzw. Schutzschicht oder die Beschriftung mit der Lasergravur zerstört wurde. Somit ist es ein wesentlicher Vorteil, wenn die neuartigen Bearbeitungssysteme 1 mit einer derartigen Datenbank 24 zum Hinterlegen von Werkstücken 9 ausgestattet sind, wobei für die Werkstücke 9 zumindest ein Bearbeitungsbereich 25 definiert ist. Dabei sind möglichst viele Informationen bzw. Daten, wie beispielsweise das Werkstück 9 bzw. Typenbezeichnung, die graphische Darstellung, die Länge, Breite und Höhe des Werkstücks 9, das Material des Werkstücks 9 bzw. die Materialbereich bei unterschiedlich verwendeten Materialien, sowie zumindest ein Bearbeitungsbereich 25, insbesondere ein Gravur-Bereich, als auch ein Start- bzw. Nullpunkt und/oder Referenzpunkt für das Bearbeitungsgerät 1, insbesondere den Laserplotter 15, usw. hinterlegt.

Die Erfassung der Produkte, insbesondere der Werkstücke 9, erfolgt bevorzugt beim Hersteller bzw. Vermieter des Bearbeitungssystem 1 selbst, wobei die Aktualisierung der Datenbank 24 über das Verbindungssystem 16 erfolgt, d.h., wenn ein User ein neues Produkt bzw. Werkstück 9 erstmalig bearbeiten möchte oder wenn ein neues Produkt bzw. Werkstück 9 auf den Markt kommt, so wird dieses Produkt an die Zentralle bzw. dem Hersteller gesendet, der anschließend sämtliche Daten des Produktes erfasst und derart aufbereitete, das diese anschließend in die Datenbank 24 integriert werden kann und für die Auswahl zur Verfügung steht. Dies ist insofern von Vorteil, da bei der erstmaligen Nutzung eines neuen Produktes sichergestellt werden muss, welche Bereiche bearbeitet werden dürfen und welche nicht.

Grundsätzlich wäre es jedoch möglich, durch entsprechende Eingabe neuartige Produkte direkt Vor Ort einzugeben und zu speichern, sodass diese später wieder zur Verfügung stehen. Auch wäre es denkbar, dass nach der Speicherung die Daten an den Hersteller bzw. die Zentralle zur Kontrolle und Überarbeitung übermittelt wird, sodass diese anschließend das Produkt auch für andere Bearbeitungssysteme 1 in anderen Geschäften 22 freigibt und diese Daten über deren Verbindungssysteme 16 aktualisiert werden. Bei einem derartigen Vorgehen ist es von Vorteil, dass eine unmittelbare Bearbeitung des neuen Produktes vom User Vor Ort durchgeführt werden kann, sodass dieser nicht darauf warten muss, bis die Daten in die Datenbank 24 eingespielt werden, wobei jedoch anschließend eine detaillierte Überarbeitung und Erfassung der gespeicherten Daten des Produktes vom Hersteller oder Vermieter vorgenommen wird.

Weiters ist es möglich, dass das Eingabegerät bzw. das Anzeigeelement 11b mit einem Verbindungssystem 16 ausgestattet ist, wie dies schematisch in Fig. 2 dargestellt ist. Dadurch ist es möglich, dass das Anzeigeelement 11b räumlich getrennt vom Aufstellungsort des Bearbeitungsgerätes 1 bzw. Bearbeitungssystems 1 verwendet werden kann bzw. einsetzbar ist. Wie in Fig. 2 ersichtlich, kann dadurch in einem Geschäft 22a eine Bearbeitungssystem 1 mit einem dazugehörigen Anzeigeelement 11a betrieben werden, wobei in einem weiteren, bevorzugt benachbarten Geschäft 22b das Anzeigeelement 11b betrieben wird bzw. betreibbar ist, sodass die Kunden im Geschäft 22b mit dem Anzeigeelement 11b entsprechende Bearbeitungsprozesse über die Bedienersoftware erstellen. Nach Abschluss der Eingabe am Anzeigeelement 11b wird der Kopplungs-Button 12 am Anzeigeelement 11b aktiviert, sodass nunmehr eine Verbindungsaufbau mit dem nächstgelegenen Bearbeitungssystem 1, insbesondere mit dem Geschäft 22a, über das integrierte Verbindungssystem 16 erfolgt und die Daten zur Bearbeitung übertragen werden. Ein Operator am Aufstellungsort des Bearbeitungssystems 1 kann nunmehr das Werkstück 9 einlegen, sodass der Bearbeitungsprozess durchgeführt werden kann und der User aus dem anderen Geschäft 22b das fertig bearbeitete Werkstück 9 abholen kann. Damit der User informiert wird, wann sein Werkstück 9 fertig gestellt wird, wird nach dem Verbindungsaufbau am Anzeigeelement 11b eine Abholuhrzeit angezeigt. Dabei werden bereits gespeicherte Bearbeitungsprozesse mitberücksichtigt, sodass der Kunde eine möglichst reale Uhrzeit angezeigt bekommt, wann sein Werkstück 9 fertig gestellt ist. Damit bei einer derartigen Arbeitsweise ein schneller Abarbeitungsprozess gewährleistet ist, wird vor, während oder nach der Datenübertragung vom Anzeigeelement 11b aus dem Geschäft 22b ohne Bearbeitungssystem 1 ein Auftragsnachricht an einen Operator des Geschäftes 22a mit dem Bearbeitungssystem 1 erstellt und gesendet. Diese Auftragsnachricht kann beispielsweise eine Aktivierung eines Piepsers und/oder eine SMS und/oder Email an ein Handy, Computer und/oder eine Aktivierung einer Info-Leuchte am Bearbeitungssystem 1 erfolgen, sodass der Operator sofort erkennen kann, dass ein externe Bearbeitungsprozess eingegangen ist. Auch ist es möglich, dass in der Auftragsnachricht sämtliche Informationen enthalten und angezeigt werden, sodass der Operator das entsprechende Werkstück 9 einlegen kann. Es ist aber auch möglich, dass der Operator beim Aktivieren des externen Bearbeitungsauftrages am Bearbeitungssystem 1 sämtlich Daten angezeigt bekommt bzw. an dem zum Bearbeitungsgerät bzw. Bearbeitungssystem 1 dazugehörigen Anzeigeelement 11a die Eingaben entnehmen kann. Derartige Vorgehensweisen sind von Vorteil bei kleineren Geschäften 22b, bei denen wenig Raum zum Aufstellen des Stand-Alone-Gerätes vorhanden ist.

Bevorzugt wird bei einem derartigen Ausbildung, bei dem ein Anzeigeelement 11 in einem anderen Geschäft 22 bzw. Kaufhaus 22 zusätzlich betrieben wird, dass das Anzeigeelement 11 mit einem Verbindungssystem 16 zum Datenaustausch mit einem weiterem Verbindungssystem 16 in dem Bearbeitungssystem 1 ausgestattet ist, wobei das ortsunabhängige Anzeigeelement 11 automatisch die Verbindung mit dem am nächst gelegenen Bearbeitungssystem 1 vorschlägt bzw. auswählt. Dabei ist in der Bedienersoftware eine Auswahlliste der naheliegenden Bearbeitungssysteme 1 abrufbar bzw. dargestellt, wobei die Auslastung bzw. Bearbeitungszeit zum Durchführen eines Bearbeitungsprozesses und/oder die Entfernung zum Standort des Anzeigeelementes 11 dargestellt ist. Somit kann der Kunde sehen, wie lange es an welchen Standort dauert, bis sein Produkt fertig gestellt ist. Der Kunde kann aus der Auswahlliste das für ihm Best mögliche Bearbeitungssystem 1 auswählen, sodass anschließend an dieses die Daten übersendet werden. Weiters ist es möglich, dass zusätzlich zur Anzeige der Entfernung zum Standort des Anzeigeelementes 11 und der Bearbeitungszeit bzw. Auslastung eine Wegbeschreibung zum aus der Auswahlliste ausgewählten Bearbeitungssystem 1 angezeigt und über das Kommunikationssystem 7 ausdruckbar ist.

Zur Vereinfachung der Auswahl des zu bearbeitenden Produktes bzw. Werkstückes 9 ist es auch möglich, dass ein Lesesystem 27 in das Bearbeitungssystem 1 oder am Anzeigeelement 11 integriert ist. Das Lesesystem 27 ist beispielsweise durch einen Bar-Code-Scanner 28, einen QR-Scanner, Laser-Scanner, usw., oder Softwaretechnisch durch einen entsprechende App am Anzeigeelement 11 gebildet, wobei der Scanner 28 als Handgerät oder in das Gehäuse 2 eingebaut ist. Der User braucht somit nur noch dem am Werkstück 9 bzw. Produkt angebrachten Code 29, insbesondere Bar-Code oder QR-Code, mit dem Lesesystem 27, insbesondere den Scanner 28 oder einer Kamera am Anzeigeelement 11 (nicht dargestellt), einzuscannen bzw. aufzunehmen, worauf aufgrund des erkannten Codes 29 ein Werkstückerkennung erfolgt, da der Code 29 zu dem entsprechenden Werkstück 9 in der Datenbank 24 hinterlegt ist. Die Bedienersoftware ruft anschließend das entsprechende Produkt bzw. Werkstück 9 auf und wird anschließend mit den Daten des Werkstückes 9 aktualisiert, sodass der User nur noch die Texte bzw. Graphiken in den Bearbeitungsbereichen 25 eingeben muss. Hierzu ist es möglich, dass eine graphische Darstellung des Produktes an der Bedienersoftware dargestellt wird, wobei die hinterlegten Bearbeitungsbereiche 25 entsprechend markiert sind.

Das Bearbeitungssystem 1 kann jedoch auch derart ausgeführt sein, dass der Steuerbereich 4 und/oder Eingabebereich 4a zur automatischen Erkennung des in der Datenbank 24 hinterlegten Werkstückes 9 durch Erfassen des eingelegten Werkstückes 9 ausgebildet ist. Dies kann derart erfolgen, dass eine automatische Erkennen des Werkstückes 9 durch die Erfassung der Länge, der Breite und der Höhe des Werkstückes 9 erfolgt, sodass aufgrund der hinterlegten Daten für das Werkstück 9 eine entsprechende Auswertung durchgeführt wird. Bevorzugt wird das System derart eingesetzt, in dem der User in der Bedienersoftware eine Produktgruppe, wie beispielsweise Smartphone, Tablet-PC, Smartphone-Hüllen, usw. auswählt, sodass aufgrund der Ermittlung der Länge, Breite und Höhe des Werkstückes 9 nunmehr auf Grund der unterschiedlichen Dimensionen der Hersteller das Werkstück 9 bzw. Produkt und Type einfacher erkennbar ist bzw. erkannt wird und die Daten geladen werden können, d.h., dass durch die Vorgabe einer Produktgruppe die Auswahlmöglichkeit in der Datenbank reduziert wird, sodass eine möglichst exakte Erkennung des Produktes möglich ist. Die Erfassung kann beispielsweise über ein Vermessung im Bearbeitungsbereich 3 oder einen Scann des Produktes erfolgen.

Auch ist es möglich, dass zum automatischen Erkennen des Werkstückes 9 eine Kamera zur Aufnahme des Bearbeitungsbereiches 9 oder des Werkstückes 9 angerordnet ist, d.h., dass beispielsweise das eingelegte Werkstück 9 von einer dem Bearbeitungsbereich 3 zugeordneten Kamera (nicht dargestellt) eine Abbildung erzeugt, welches dann mit dem hinterlegten graphischen Bildern zu den einzelnen Werkstücken 9 verglichen wird und somit eine entsprechende Auswertung vorgenommen wird. Eine weitere Möglichkeit ist, dass das Anzeigeelement 11 eine Kamera (nicht dargestellt) aufweist, mit der der User ein Bild des Produktes bzw. Werkstückes 9 aufnimmt und dieses anschließend mit den hinterlegten Bildern verglichen wird. Bevorzugt sind dazu auch mehrere Bilder der Produkte, insbesondere sämtliche Ansichten, in der Datenbank 24 hinterlegt.

Sollte bei der automatischen Erkennung des Werkstückes 9 bzw. der Type des Produkts keine eindeutige Zuordnung vom Produkten möglich sein, so wird dem Nutzer bzw. User eine Auflistung der nahe liebendsten bzw. möglichsten hinterlegten Produkte angezeigt, sodass dieser anschließend das entsprechende Produkt auswählen kann. Auch ist es möglich, dass der User trotz installierter automatischen Erkennung oder ohne dieser das Produkt bzw. das Werkstück 9 manuell einstellt, wobei wiederum bevorzugt dazu immer nur jene Produkte einer Produktgruppe den User angezeigt werden, die er auswählt, sodass die Auswahl der Produkte vereinfacht wird, d.h., dass der User zuerst eine Produktgruppe, beispielsweise Smartphone, Tablet-PC, Stempel, usw., auswählt, worauf nur jene Produkte angezeigt werden, die diesen Produktgruppen zugeordnet sind. Dadurch kann die Anzahl der auszuwählende Produkte bedienerfreundlich reduziert werden. Hierzu ist es auch möglich, dass mehrere derartige Abstufungen von Gruppen möglich sind, um die Anzahl der Produkte so weit wie möglich zu verringern und somit die Bedienerfreundlichkeit zu erhöhen. Diese Gruppen sind zu den Produkten in der Datenbank 24 gespeichert, wobei es möglich ist, dass mehrere Gruppendefinitionen für ein Produkt gespeichert werden können, sodass dieses Produkt bei unterschiedlichen Gruppen auf der Auswahlliste angezeigt wird.

Weiters ist es möglich, dass die Datenbank 24 vom Operator bzw. Verkäufer bearbeitet wird, um eine entsprechend für das Geschäft 22 bzw. Kaufhaus 22, insbesondere dem Produktsortiment, Anpassung vorzunehmen. Dazu kann der Operator bzw. Verkäufer die einzelnen Werkstücke 9 aufrufen und aktivieren bzw. deaktivieren, d.h., dass der Operator bzw. Verkäufer die in der Datenbank 24 aufrufbaren Werkstücke 9 an das Verkaufssortiment des Geschäftes 22 anpasst, sodass nur jene Werkstücke 9 aufrufbar sind, die auch tatsächlich verkauft werden. Selbstverständlich kann dies auch über den Code 29 der Werkstücke 9 erfolgen, wobei dazu beispielsweise lediglich der Code 29 der Verkaufsgegenstände, insbesondere der Werkstücke 9, eingescannt wird, sodass anschließend nur die eingescannte Werkstücke 9 abrufbar sind. Dazu ist es möglich, dass hierzu ein entsprechender Lernmodus aktivierbar ist, bei der das Verkaufssortiment eingegeben wird.

Für die Aktualisierung eines oder sämtlich in Betrieb befindenden Bearbeitungssysteme 1 ist es auch möglich, dass ein neu erfasstes Produkt, insbesondere die Daten hierfür, in einer Cloud 29 vom Hersteller hochgeladen wird, worauf die einzelnen Bearbeitungssystem 1 selbstständig zu definierten Zeitpunkten eine Aktualisierung der Datenbank 24 vornimmt. Selbstverständlich ist es auch möglich, dass Updates für das Betriebssystem oder andere Software-Aktualisierungen oder Daten in der Cloud 29 gespeichert werden können, die von den Bearbeitungssysteme 1 selbstständig oder manuell abgerufen werden. Derartige Cloud-Speicher 29 haben den Vorteil, dass zu beliebigen Zeitpunkten Daten, Software, usw. hochgeladen werden können und diese zu beliebigen Zeitpunkt abrufbar sind. Somit können Aktualisierungen in den verschiedensten Kontinenten der Welt zu jenen Zeitpunkten durchgeführt werden, wo kein Betrieb des Geschäftes 22 bzw. des Kaufhauses 22 stattfindet, um den Betrieb der Anlage nicht zu stören.

Auch ist es möglich, dass in der Datenbank 24 eine Lagerverwaltung integriert ist, sodass zu den entsprechend im Geschäft 22 zu kaufenden Werkstücken 9, insbesondere den Stempelplatten-Rohlingen 9 und/oder den Stempeln hierfür oder den Zubehör, usw., der Warenbestand, also die Anzahl der vorhanden Stückzahlen des Produkts, eingetragen ist, welche nach einen entsprechenden Bearbeitungsprozess für dieses Produkt reduziert wird. Wird dabei eine bestimmte definierte Warenbestand erreicht bzw. unterschritten, so wird von Bearbeitungssystem 1 eine Warenbestellung angefordert. Dazu kann direkt über das Verbindungssystem 16 eine Warenbestellung zum Hersteller bzw. Lieferanten über das übergeordnete Netzwerk 17, insbesondere das Internet, abgesetzt werden oder es wird die benötigte Warenbestellung am Anzeigeelement 11 oder am Bearbeitungssystem 1 angezeigt, sodass der Operator bzw. Verkäufer diese aktivieren und abschicken kann. Diese Lagerverwaltung kann wiederum für die unterschiedlich gespeicherten Werkstücke 9 in der Datenbank 24 aktiviert oder deaktiviert werden. Dazu ist es auch möglich, dass beliebige Bestelladressen für die unterschiedlichen Werkstücke 9 hinterlegt werden können.

Der Ordnung halber sei abschließend darauf hingewiesen, dass zum besseren Verständnis des Aufbaus des Systems und deren Komponenten bzw. dessen Bestandteile teilweise unmaßstäblich und/oder vergrößert und/oder verkleinert dargestellt wurden.

## Patentansprüche

1. Bearbeitungssystem (1), umfasst zumindest einen Bearbeitungsbereich (3), einen Steuerbereich (4), einen Eingabebereich (4a), und optional einen Aufnahmebereich (5) und/oder einen Präsentationsbereich (5), wobei über ein Eingabe- und/oder Anzeigeelement (11) von einem User in einer darin installierten Bedienersoftware ein Text und/oder Grafik eingebbar ist, die an eine im Steuerbereich (4) laufende Steuersoftware übergebbar ist, wobei in dem Eingabebereich (4a) und/oder dem Steuerbereich (4) eine Datenbank (24) integriert ist, in der Daten der zu bearbeitenden Werkstücke (9) bzw. Rohlinge (9) hinterlegt sind, **dadurch gekennzeichnet, dass** der Steuerbereich (4) und/oder Eingabebereich (4a) zur automatischen Erkennung des in der Datenbank (24) hinterlegten Werkstückes (9) durch Erfassen des Werkstückes (9) ausgebildet ist.

2. Bearbeitungssystem nach Anspruch 1 **dadurch gekennzeichnet, dass** das Werkstück (9) bzw. der Rohling (9) von der Datenbank (24) über die Bedienersoftware auswählbar ist oder in die Bedienersoftware ladbar sind.

3. Bearbeitungssystem nach einem oder mehreren der vorhergehenden Ansprüche, **dadurch gekennzeichnet, dass** das automatische Erkennen des Werkstückes (9) durch die Erfassung der Länge, der Breite und der Höhe des Werkstückes (9) erfolgt.

4. Bearbeitungssystem nach einem oder mehreren der vorhergehenden Ansprüche, **dadurch gekennzeichnet, dass** zum automatischen Erkennen des Werkstückes (9) eine Kamera zur Aufnahme des Bearbeitungsbereiches (9) oder des Werkstückes (9) angerordnet ist.

5. Bearbeitungssystem nach einem oder mehreren der vorhergehenden Ansprüche, **dadurch gekennzeichnet, dass** für die unterschiedlich hinterlegten Werkstücke (9) zumindest ein oder mehrere Bearbeitungsbereiche (25) definiert und gespeichert sind, die über die Bedienersoftware auswählbar sind.

6. Verfahren zum Betreiben eines Bearbeitungssystems (1), bei dem an einem Eingabegerät (11) bzw. Anzeigeelement (11) vom Nutzer ein gewünschter Bearbeitungsvorgang über eine Bedienersoftware erstellt wird, worauf der Bearbeitungsvorgang an ein Steuergerät, insbesondere an eine Steuersoftware, übergeben wird und von diesem derart umgewandelt wird, dass eine Ansteuerung eines Bearbeitungsgeräts zum Durchführen des gewünschten Bearbeitungsvorgang durchgeführt wird, wobei über ein Verbindungssystem (16) eine Verbindung des Bearbeitungssystem (1), insbesondere der einzelnen Bereich, mit einem übergeordneten Netzwerks (17), insbesondere einem Internet, zum Senden und Empfangen von Daten durchgeführt wird. **dadurch gekennzeichnet, dass** in dem Bearbeitungssystem (1), insbesondere in einem Eingabebereich (4a) und/oder dem Steuerbereich (4), eine Datenbank (24) betrieben wird, in der Daten der zu bearbeitenden Werkstücke (9) bzw. Rohlinge (9) gespeichert werden, wobei von dem Steuerbereich (4) und/oder dem Eingabebereich (4a) eine automatischen Erkennung des in der Datenbank hinterlegten Werkstückes (4a) durch Erfassen des Werkstückes (9) erfolgt,

7. Verfahren nach Anspruch 16, **dadurch gekennzeichnet, dass** eine Erfassung des Werkstückes (9) über ein Lesesystem (27), durchgeführt wird, wobei vom Lesesystem (27) ein am Werkstück (9) angebrachten Code (29) erfasst wird, worauf die für dieses Werkstück (9) hinterlegten Daten in die Bedienersoftware am Eingabegerät (11) bzw. Anzeigeelement (11) geladen werden.

## Claims

1. Processing system (1), comprising at least one processing area (3), one control area (4), one input area (4a), and optionally one receiving area (5) and / or one presentation area (5), wherein via an input and / or display element (11) a user can enter a text and / or graphics in an operating software installed therein, which text and / or graphics can be passed to a control software running in the control area (4), wherein into the input area (4a) and / or the control area (4) a database (24) is integrated, in which data of the blanks (9) or workpieces (9) to be processed are stored, **characterised in that** the control area (4) and / or the input area (4a) are designed for the automatic identification of the workpiece (9) stored in the database (24) by detection of the workpiece (9).

2. Processing system according to claim 1, **characterised in that** the workpiece (9) or the blank (9) can be selected from the database (24) via the operating software or loaded into the operating software.

3. Processing system according to any one or more of the preceding claims, **characterised in that** the automatic identification of the workpiece (9) is done by detection of the length, width and height of the workpiece (9).

4. Processing system according to any one or more of the preceding claims, **characterised in that** for automatic identification of the workpiece (9) a camera for imaging of the processing area (9) or the workpiece (9) is provided.

5. Processing system according to any one or more of the preceding claims, **characterised in that** for the differently stored workpieces (9) at least one or several processing areas (25) are defined and stored, which are selectable via the operating software.

6. Method of operating a processing system (1), wherein on an input device (11) or display element (11) the user creates a desired processing operation via an operating software, whereupon the processing operation is passed to a control device, in particular to a control software, and converted by the same in such a manner that control of a processing unit is carried out for performing the desired processing operation, wherein via a connecting system (16) a connection of the processing system (1), in particular the individual area, to a superordinate network (17), in particular an internet network, for transmitting and receiving data is established, **characterised in that** in the processing system (1), in particular in an input area (4a) and / or the control area (4), a database (24) is run, in which data of the blanks (9) or workpieces to be processed (9) are stored, wherein the control area (4) and / or the input area (4a) perform an automatic identification of the workpiece (4a) stored in the database by detection of the workpiece (9).

7. Method according to claim 6, **characterised in that** the identification of the workpiece (9) is carried out by a reading system (27), wherein the reading system (27) detects a code (29) attached to the workpiece (9), whereupon the data stored for this workpiece (9) are loaded into the operating software on the input device (11) or display element (11), respectively.

## Revendications

1. Système de traitement (1), comprenant au moins une zone de traitement (3), une zone de commande (4), une zone de saisie (4a), et en option une zone de réception (5) et/ou une zone de présentation (5), un texte et/ou un graphique pouvant être saisis par un utilisateur par le biais d'un élément de saisie et/ou d'affichage (11) dans un logiciel utilisateur préalablement installé sur ce système et transmissible à un logiciel de commande exécuté dans la zone de commande (4), une banque de données (24) étant intégrée dans la zone de saisie (4a) et/ou la zone de commande (4) dans laquelle des données relatives aux pièces à traiter (9) ou pièces brutes (9) sont enregistrées, **caractérisé en ce que** la zone de commande (4) et /ou la zone de saisie (4a) est conçue pour la reconnaissance automatique des pièces à traiter (9) enregistrées dans la banque de données (24) par la saisie de la pièce à traiter (9).

2. Système de traitement selon la revendication 1 **caractérisé en ce que** la pièce à traiter (9) ou la pièce brute (9) peut être sélectionnée par la banque de données (24) par le biais du logiciel utilisateur ou être téléchargée dans le logiciel utilisateur.

3. Système de traitement selon une ou plusieurs des revendications susmentionnées **caractérisé en ce que** la reconnaissance automatique de la pièce à traiter (9) s'effectue par la saisie de la longueur, la largeur et la hauteur de la pièce à traiter (9).

4. Système de traitement selon une ou plusieurs des revendications susmentionnées **caractérisé en ce que** la reconnaissance automatique de la pièce à traiter (9) s'effectue par une caméra installée pour la réception de la zone de traitement (9) ou de la pièce à traiter (9).

5. Système de traitement selon une ou plusieurs des revendications susmentionnées **caractérisé en ce qu'**au moins une ou plusieurs zones de traitement (25) sont définies et enregistrées pour les différentes pièces à traiter (9) enregistrées pouvant être sélectionnées par le biais du logiciel utilisateur.

6. Procédé pour l'exploitation d'un système de traitement (1), lors duquel une opération de traitement souhaitée est définie par l'utilisateur par le biais du logiciel utilisateur sur un appareil de saisie (11) ou élément d'affichage (11), après quoi l'opération de traitement est transmise à un appareil de commande, notamment un logiciel de commande, et convertie de telle manière par ce dernier qu'une commande de l'appareil de traitement est exécutée pour la réalisation de l'opération de traitement souhaitée, une connexion du système de traitement (1) étant établie par le biais d'un système de connexion (16), notamment de la zone individuelle, avec un réseau supérieur (17), notamment Internet pour l'envoi et la réception de données, **caractérisé en ce que** dans le système de traitement (1), notamment dans une zone de saisie (4a) et/ou une zone de commande (4), une banque de données (24), dans laquelle des données relatives aux pièces à traiter (9) ou pièces brutes (9) sont enregistrées, est exploitée, une reconnaissance automatique de la pièce (4a) enregistrée dans la banque de données s'effectuant par la zone de commande (4) et/ou la zone de saisie (4a) par la saisie de la pièce (9).

7. Procédé selon la revendication 16 **caractérisé en ce qu'**une saisie de la pièce (9) est effectuée par le biais du système de lecture (27), un code (29) apposé sur la pièce (9) étant saisi par le système de lecture (27), après quoi les données enregistrées pour cette pièce (9) sont chargées dans le logiciel utilisateur au niveau de l'appareil de saisie (11) ou élément d'affichage (11).
